# EUROPEAN PATENT SPECIFICATION

(11) **EP 1 377 086 B1**
(45) Date of publication and mention of the grant of the patent: **04.10.2006**
(21) Application number: 02405548.5
(22) Date of filing: 28.06.2002
(51) Int. Cl.: H04Q 7/22

(54) **Method for handling short messages, message server, messaging application and telecommunications network**
Verfahren zur Behandlung von Kurznachrichten, Nachrichtenserver, Nachrichtenanwendung und Telekommunikationsnetz
Méthode pour traiter des messages courts, serveur de message, application de transmission de messages et réseau de télécommunications

(43) Date of publication of application: 02.01.2004
(73) Proprietor: BMD Wireless AG, 6300 Zug (CH)
(72) Inventor: Woog, Marc A., 8185 Winkel (CH)
(74) Representative: Rutz & Partner

(56) References cited:
- WO-A-00/48413
- US-A- 6 134 432
- SMALE S: "HP OPENMAIL SHORT MESSAGE SERVICE (SMS) GATEWAY: TH MOBILE PHONE AS AN E-MAIL CLIENT-OF-CHOISE" INTERNATIONAL WORKSHOP ON MOBILE MULTI-MEDIA COMMUNICATIONS, XX, XX, 11 April 1995 (1995-04-11), pages 1-6, XP000671022

## Description

The present invention relates to a method for handling Short Messages SM, a message server and a telecommunications network that comprises at least one message server according to claim 1, claim 10 and claim 13.

The present invention further relates to a method for handling Short Messages SM that terminate in a Mobile Telecommunications Network; for example as specified in the GSM (Global System for Mobile Communications) standards, the TDMA standards, the CDMA standards, the 3G standards (MMS) as well as in the Signalling System No. 7, IS-41 and IS-95 protocol standards; and that originate from a network not operating according to the standards of said Mobile Telecommunications Network.

More particularly the present invention relates to a method for billing Short Messages SM that originate in a network operating according to the Internet protocol suite, such as the Internet or corporate Intranets or Extranets, and terminating in said Mobile Telecommunications Network.

### BACKGROUND OF THE INVENTION

Modern Mobile Telecommunications Networks such as the Pan-European Cellular System, known as the Global System for Mobile Communications GSM, allow the transfer of Short Messages SM between subscribers. An introduction to the GSM system can be found in [1], Lajos Hanzo, THE COMMUNICATIONS HANDBOOK, CRC PRESS, Boca Raton 1997, Chapter 87, pages 1226 ff. Below references are also given to [2], B. Walke, Mobilfunknetze und ihre Protokolle, Band 1, B.G. Teubner Verlag, Stuttgart 2000 and to [3], ETSI European Telecommunication Standard ETS 300 536.

The transfer of Short Messages SM originating in a network working according to TCP/IP internetworking protocols (see [1], pages 702 - 704 or [6], Douglas E. Comer, INTERNETWORKING with TCP/IP, PRINCIPLES, PROTOCOLS, AND ARCHITECTURES, 4^{th} EDITION, Prentice Hall 2000, pages 183-195) and transferred and delivered through the GSM system to a subscribers Mobile Station MS is described in [4], U.S. Patent No. 5,768,509.

The GSM system uses the Signalling System Number 7 which has been enhanced by a Mobile Application Part (MAP) that is specified in [5] GSM Technical Specification 09.02 (Mobile Application Part (MAP) specification) as well as TDMA is enhanced with the IS-41 protocol. A description of Signalling System Number 7 and the IS-41 protocol is given in [1], chapter 35, pages 480 to 495 and [1], chapter 80.3, pages 1121-1123.

Transfer of Short Messages SM is preferably performed in the control channels SDCCH and SACCH (see [2], page 201 and 278-279). The protocol architecture of the Short Message System SMS is shown in [3], chapter 9, page 30.

Transfer of Short Messages SM between Short Message Entities SME, terminals, Mobile Stations MS or fixed stations including data terminals, requires a service centre SC which is capable of
a) receiving a Short Message SM from a Mobile Station MS or over an interface from a data terminal within a TCP/IP network,
b) submitting a Short Message SM to a Mobile Station MS or over an interface to a data terminal within a TCP/IP network and
c) receiving and returning reports relating to sent or received Short Messages SM.

Fundamental procedures regarding the transfer of a Short Message SM from a service centre SC to a Mobile Station MS are shown in [3], pages 56 and 57; see also [3], Annex 2. The basic structure of the network, that connects Short Message Entities SME, is shown in [3], page 23.

A Mobile Terminated Short Message MT-SM is forwarded by the service centre SC to a gateway function GMSC which, according to the specifications (see [3], page 11), is a function of a Mobile Services Switching Centre MSC (in GPRS-Systems a message may be transferred across a Serving GPRS Support Node SGSN, see [2], page 341 and page 389). The gateway GMSC is capable of interrogating a Home Location Register HLR which contains routing information to the visited Visitor Location Register VLR. The Visitor Location Register VLR is the functional unit that attends to a Mobile Station MS operating outside the area of the Home Location Register. A visiting Mobile Station MS is automatically registered at the nearest Mobile Services Switching Center MSC and the Visitor Location Register VLR is informed accordingly. Based on the retrieved routing information the gateway GMSC forwards the Short Message SM to the visited Mobile Services Switching Centre MSC. The visited Mobile Services Switching Center MSC retrieves corresponding subscriber information from the Visitor Location Register VLR based on which the Short Message SM is forwarded to the Mobile Station MS. Operations are terminated by returning a delivery report to the service centre SC of the network where the Short Message SM has been initiated.

Fundamental procedures regarding the transfer of a Short Message SM within a GSM system from a Mobile Station MS to a service centre SC are shown in [3], pages 64 and 65.

Before a Mobile Originating Short Message MO-SM is transferred the Mobile Services Switching Centre MSC retrieves information from the Visitor Location Register VLR in order to verify that the requested service is available to the subscriber. Afterwards the Short Message SM is transferred via the Mobile Services Switching Centre MSC to an interworking function IWMSC belonging to a Mobile Services Switching Centre MSC. The interworking function IWMSC is capable of receiving a Short Message SM from within the Mobile Telecommunications Network PLMN and submitting it to a service centre SC which will forward the Short Message SM to the addressed subscriber as described above.

The Mobile Station MS will always address the required service centre SC by an E.164 address (see [3], page 24, paragraph 5.2.2). It is important to note that a subscriber with a Mobile Station MS will usually select the service centre SC of his network operator and not the service centre SC through which a message has been transferred to the subscriber if the message originates in another network. Additionally a subscriber may not be allowed to use a foreign service centre SC for submitting messages, as the concerned foreign network operator may enforce this by means of black or white listing.

Transfer of messages originating in an IP-network and being forwarded to a service centre SC will therefore be transferred from the service centre SC to the addressed Mobile Station MS as described above.

The billing of Short Message SM traffic may be performed in various ways. The transfer of a Short Message SM may be billed by the operator of the Mobile Telecommunications Network to the sender or the receiver of the Short Message SM. Further, messaging services may be pre-paid or post-paid by the subscribers. In addition, the billing functionalities may be provided within a Short Message Service Centre SC (below Service Center SC) or within a Mobile Services Switching Centre MSC.

A method of handling a prepaid short messaging service is described [7], WO 01/63883 A2. According to this solution a query in an account database is performed before the transmission of the Short Message SM in order to determine if an account corresponding to the addressed party has sufficient funds. By using this method, Short Messages SM may be billed that originate from Short Message Entities SME that are operating inside or outside the Mobile Telecommunications Network.

In [8], WO 98/56202 a further method for billing of Short Messages SM is described, that allows the sender of a Short Message SM to individually charge for different services, e.g. the delivery of data concerning weather forecast or stock exchange rates. According to this method the application providing said services includes a charge advice in the Short Message SM indicating the price to be billed for reception of the requested service. The indicated charge is then included in a charge record, which is used for pre-paid or post-paid debiting of the account of the recipient subscriber.

An alternative method for individual charging for services supplied by a non-GSM application is described in [9], WO 96/06508, wherein by numeric analysis of charge records, that are generated by a Mobile Services Switching Center MSC, the category of the originator of the Short Message SM is determined. In this case the Short Message SM originator uses different addresses (E.164 numbers) of the Service Center SC in order to indicate the specific cost to be debited to the receiving party.

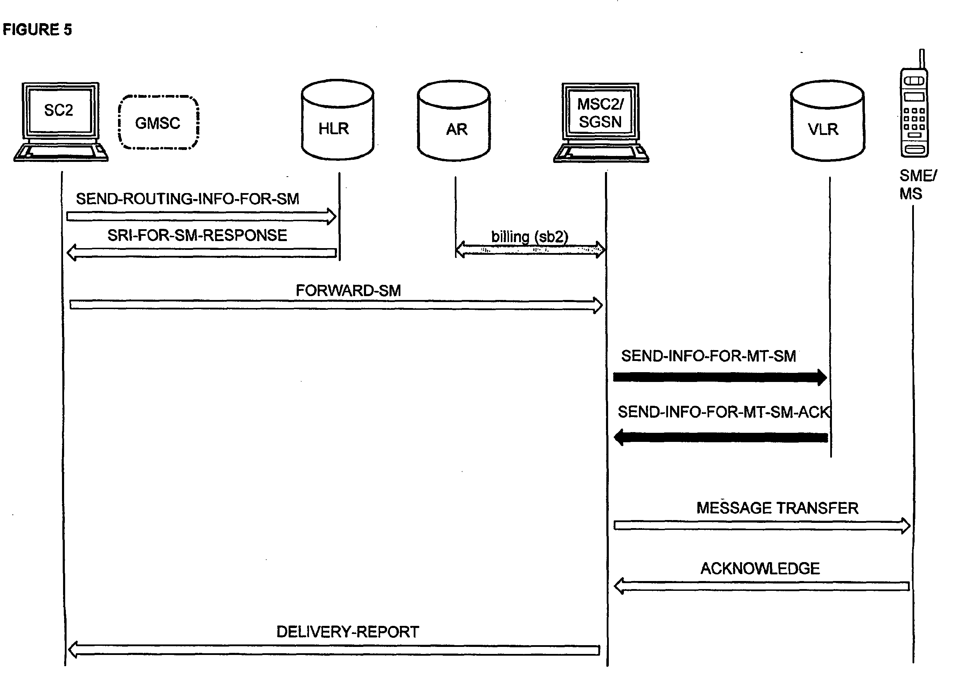

Further known are service providers that allow registered users to send and receive Short Messages SM free of charge by means of an Internet based application (see e.g. [10], GB 2351880 A, figures 5 and 10). The operator of the related Mobile Telecommunications Network debits the charges for the Short Message SM traffic to the account of the service provider, which has arranged for a compensation of the cost through other channels. As an alternative the service provider may charge the users of his services directly, e.g. via credit card.

The described methods therefore allow sending Short Messages SM from an Internet based application to a Mobile Station MS of a subscriber of the Mobile Telecommunications Network under the condition that sender directly pays the charges, the receiver is bearing the charges or the service provider offers free services.

In [12], U.S. Patent No. 6,134,432, a system and process for allowing wireless messaging is described in which, for a message sent from an outside e-mail source to a mobile phone, a gateway creates a new, temporary and unique reply MSISDN number associated with the reply address and sends message details to a proprietary billing object, which does not charge the subscriber's account, to which Short Messages SM are debited, which are sent from the subscriber's Mobile Station MS.

The known methods do therefore not allow a subscriber of the Mobile Telecommunications Network to send a Short Message SM from an Internet based application to a Mobile Station MS of a further subscriber of the Mobile Telecommunications Network with the charges being debited to its own account, to which the Short Messages SM are debited which are sent from his Mobile Station MS.

The present invention is therefore based on the object of specifying an improved method for handling Short Messages SM that terminate in a Mobile Telecommunications Network and that originate from another network not operating according to the standards of said Mobile Telecommunications Network.

It is a further object of the invention to avoid proprietary measures and agreements internal or external to the Mobile Telecommunications Network when handling messages that originate in a network operating e.g. according to the Internet protocol suite, such as the Internet or corporate Intranets or Extranets, and terminate in said Mobile Telecommunications Network.

It is another object of the invention to provide a method for billing said Short Messages SM.

Still further it is an object of the invention to provide a message server, a messaging application and a telecommunications network that allow the implementation of the inventive method.

### SUMMARY OF THE INVENTION

The above and other objects of the present invention are achieved by a method; a message server and a telecommunications network according to claim 1, claim 10 and claim 13.

The inventive method allows handling of messages, particularly Short Messages SM that are forwarded to and within a Mobile Telecommunications Network such as a GSM, TDMA, CDMA or 3G (MMS) system and that originate from a messaging application SMA implemented in a network such as an IP-network which is not using the standards of said Mobile Telecommunications Network.

According to the present invention
a) a subscriber of said Mobile Telecommunications Network provides address data and user data to the messaging application,
b) the messaging application forwards said data to a message server that uses signalling functions according to the standards of said Mobile Telecommunications Network, such as the functions of the Signalling System Number 7,
c) the message server generates, based on said data and according to the standards of the Mobile Telecommunications Network, a Mobile Originated Short Message MO-SM that contains in therefore provided fields of a Protocol Data Unit
   c1) an Originating Address OA corresponding to the subscriber's Mobile Station number MSISDN,
   c2) a corresponding Service Center Address SCA,
   c3) a corresponding Destination Address DA, and
   c4) the user data UD,
and forwards the generated Mobile Originated Short Message MO-SM via the addressed Service Center SC to its destination, that may be located inside or outside the Mobile Telecommunications Network.

The inventive method therefore allows a subscriber of a Mobile Telecommunications Network to send messages from an Internet based messaging application via the Mobile Telecommunications Network to its destination in such a way that the message is handled within the Mobile Telecommunications Network in the same manner as Short Messages SM sent from his Mobile Station MS, that is registered with the Mobile Telecommunications Network. Virtually the message server appears in the Mobile Telecommunications Network therefore as a Mobile Services Switching Center MSC that is serving registered Mobile Station(s) MS.

The advantages of the inventive method are numerous. First of all the overall handling of messages is simplified. The subscriber or a service provider, possibly the network operator, can rely on the functionalities of the Mobile Telecommunications Network. There is no need for a two stage billing (network operator → service provider → subscriber) since the subscriber can be billed directly, thus enormously reducing administrative overhead.

The inventive solution allows a network operator to create additional access points to the Mobile Telecommunications Network that can be maintained practically with no administrative overhead.

An important aspect is further that it is not necessarily a third party, i.e. an operator of the messaging application, which controls and sends the subscriber's messages but preferably the subscriber himself that uses the application provided by the network operator, so that the confidentiality level of the data transmission is significantly improved.

The messaging application, e.g. a HTML browser, may provide a simply structured interface allowing the subscriber to provide the required address and user data. During an initial session the subscriber gets registered and is required to provide the number MSISDN of his Mobile Station MS, which is registered at the Mobile Telecommunications Network.

The Service Center Address SCA which is required for the transmission of the Short Message SM, an E.164 number that is normally stored in the SIM card of the Mobile Station MS, is preferably obtained by the message server from a corresponding Home Location Register HLR, for example by means of a service equivalent or similar to "MAP_SEND_ROUTING_INFO_FOR_SM" which, would be adapted for use with Mobile Originated Short Messages MO-SM. The adapted service could be designated "MAP_SEND_ROUTING_INFO _FOR_MO_SM" or "MAP_SEND_SCA". A further service that could advantageously be adapted to provide the Service Center Address SCA in its response is the "MAP_INTERROGATE_SS" service. However, all present or future services, that include the Service Center Address SCA in the response, are/will be applicable with the inventive method.

The subscriber may get registered at the messaging application or directly at the message server. In order to prevent fraud, the messaging application or the message server reply to the subscriber's registration by means of a Short Message SM that contains a password and that is sent to the subscriber's Mobile Station MS, ensuring that only the holder of the subscriber's Mobile Station MS can use the messaging service. If subscriber's data are stored in the message server, which is normally the case then the password may be stored in the message server too, so that all security relevant data are controlled by the operator of the Mobile Telecommunications Network.

Since the status of the subscriber may change between sessions, the message server needs to know the current rights and restrictions of the served subscribers. Since the subscribers are normally not registered at a related Visitor Location Register VLR the message server preferably maintains and updates its own register for the served subscribers. For this purpose the message server regularly, for example during every session downloads the required data from the Home Location Register HLR preferably by means of the service "MAP_ INTERROGATE_SS".

In order to perform the described services and actions the message server preferably comprises functionalities of a Mobile Services Switching Center MSC and/or a Visitor Location Register VLR that allow
a) interrogation and storage of subscriber specific information from the Home Location Register HLR,
b) forwarding of Mobile Originated Short Messages MO-SM to a Service Center SC and/or
c) pre-paid or post-paid billing for Mobile Originated Short Messages MO-SM.

According to the mentioned standards implemented in the Mobile Telecommunications Network, billing may be performed in the originating Mobile Services Switching Center MSC, in a Service Center SC or in the terminating Mobile Services Switching Center MSC. Billing for transferred Short Messages SM is therefore performed according to the standards implemented in the Mobile Telecommunications Network.

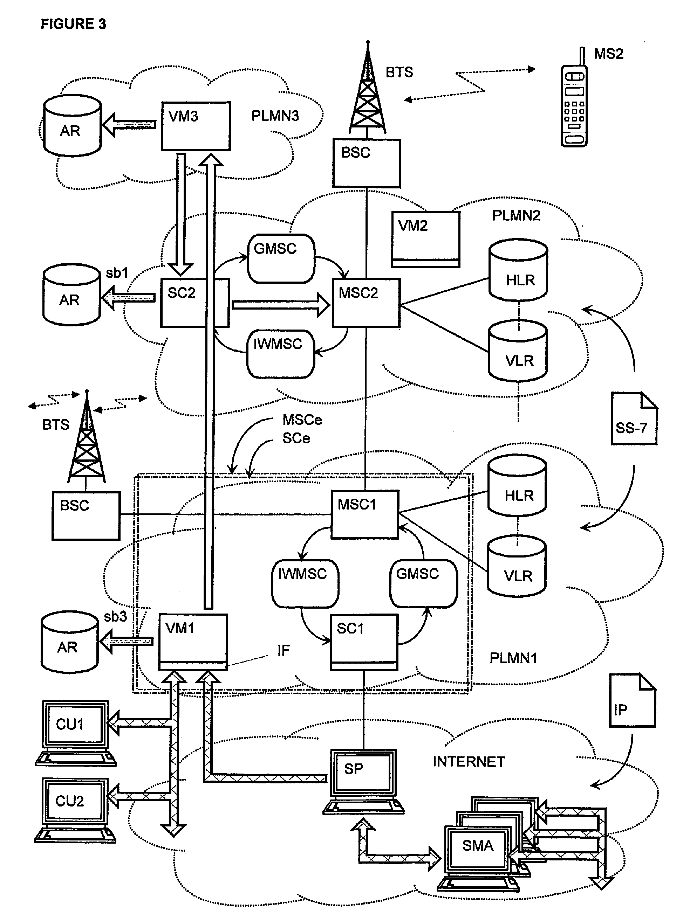

In the event that the message server operates as originating Mobile Services Switching Center MSC, then it may debit each forwarded Mobile Originated Short Message MO-SM to an account that corresponds to the Originating Address OA contained in the Mobile Originated Short Message MO-SM. Also for this case standardised functionalities can be applied, so that the transferred Short Message SM is handled in the same manner as a Short Message SM sent from the subscriber's Mobile Station MS is handled. This will be done in particular in cases where the Destination Network code DN (see [2], page 261, figure 3.56) contained in the originating Mobile Station number MSISDN indicates that subscriber is registered at the Mobile Telecommunications Network PLMN in which the message server VM is operating. In other cases the message server VM may bill the transfer of the Short Messages SM, based on an interconnection agreement, to the operator of the foreign network that is indicated by the Mobile Network Code MNC of the International Mobile Subscriber Identity IMSI (see [2], page 261-262, figure 3.57) which can be retrieved by the message server VM from the Home Location Register HLR by means of the "MAP-SEND-IMSI" service (see [5], page 198).

In the event that a message server has no direct interconnection to a Service Center SC in a foreign Mobile Telecommunications Network then the message server may use a routing table in order to forward the Mobile Originated Short Message MO-SM via at least one further message server to the addressed Service Center SC.

The message server, which uses signalling functions according to the standards of said Mobile Telecommunications Network, e.g. the functions of the Signalling System Number 7, comprises an interface that allows communication with the messaging application, a gateway function that allows adaptation of the protocols used towards the Messaging Application and inside the Mobile Telecommunications Network, preferably a memory unit that allows to store data of the registered subscribers and a processor unit that allows the generation of Mobile Originated Short Messages MO-SM according to the standards of the mobile telecommunication network.

In a preferred embodiment the message server further comprises functionalities of a Mobile Services Switching Center MSC and/or a Visitor Location Register VLR that allow
a) interrogation and storage of subscriber specific information from the Home Location Register HLR,
b) forwarding of Mobile Originated Short Messages MO-SM to a Service Center SC and/or
c) billing for Mobile Originated Short Messages MO-SM.

The inventive message server can independently be installed at an access point of the Mobile Telecommunications Network. Further, the message server can be integrated in a Service Center SC or integrated in a Mobile Services Switching Center MSC.

With the integration of the inventive message server the capabilities of the related Mobile Telecommunications Network are enhanced and its resources advantageously applied to the benefit of its operator and subscribers.

### BRIEF DESCRIPTION OF THE DRAWINGS

Some of the objects and advantages of the present invention have been stated, others will appear when the following description is considered together with the accompanying drawings, in which:

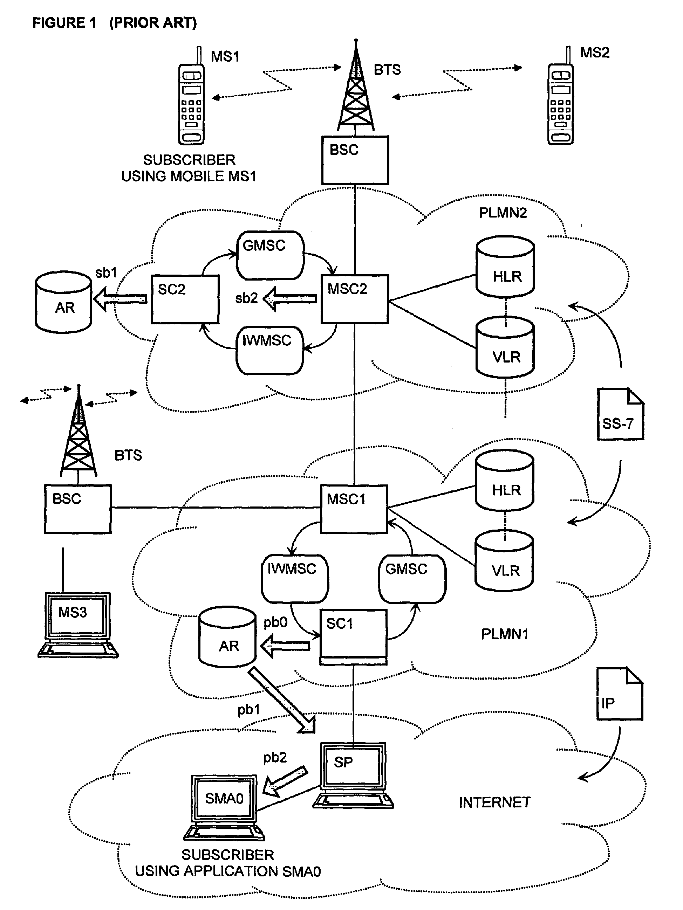

- Figure 1: shows a known telecommunications network designed to convey messages originating in the Internet or an Intranet and terminating in Mobile Stations MS of a first or a second Mobile Telecommunications Network PLMN1, PLMN2;

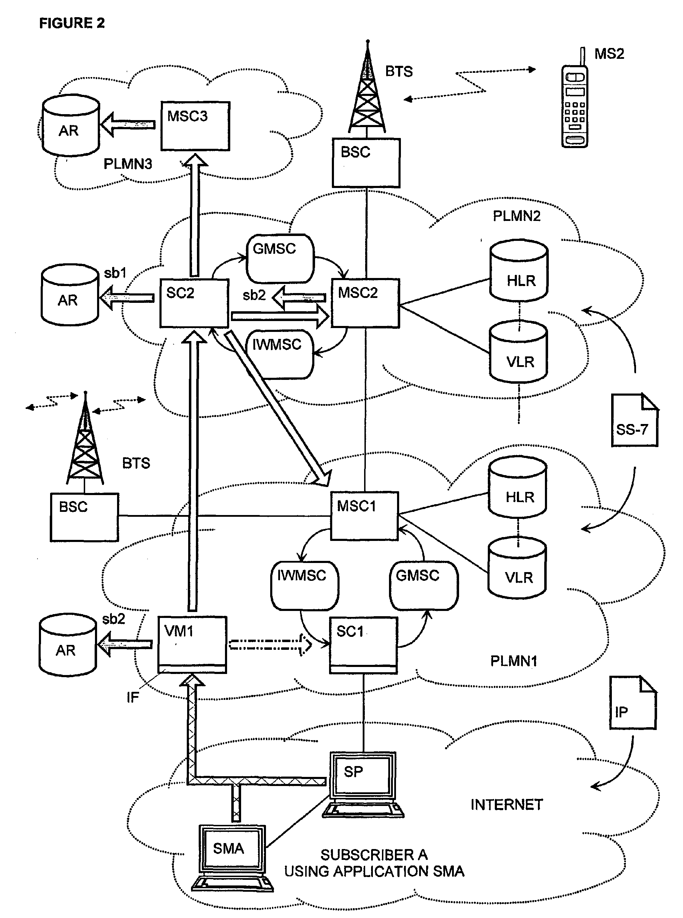

- Figure 2: shows a Mobile Telecommunications Network PLMN1 with an inventive message server VM1 that directly or indirectly connects to a messaging application SMA operating in the Internet and that is designed to forward Mobile Originated Short Messages MO-SM to a therein addressed Service Center SC1, SC2 of a first or a second Mobile Telecommunications Network PLMN1, PLMN2;
- Figure 3: shows the telecommunication network of figure 2 with the message server VM1 of the first Mobile Telecommunications Network PLMN1 being interconnected to the Service Center SC2 of the second Mobile Telecommunications Network PLMN2 via a message server VM3 installed in a third Mobile Telecommunications Network PLMN3;

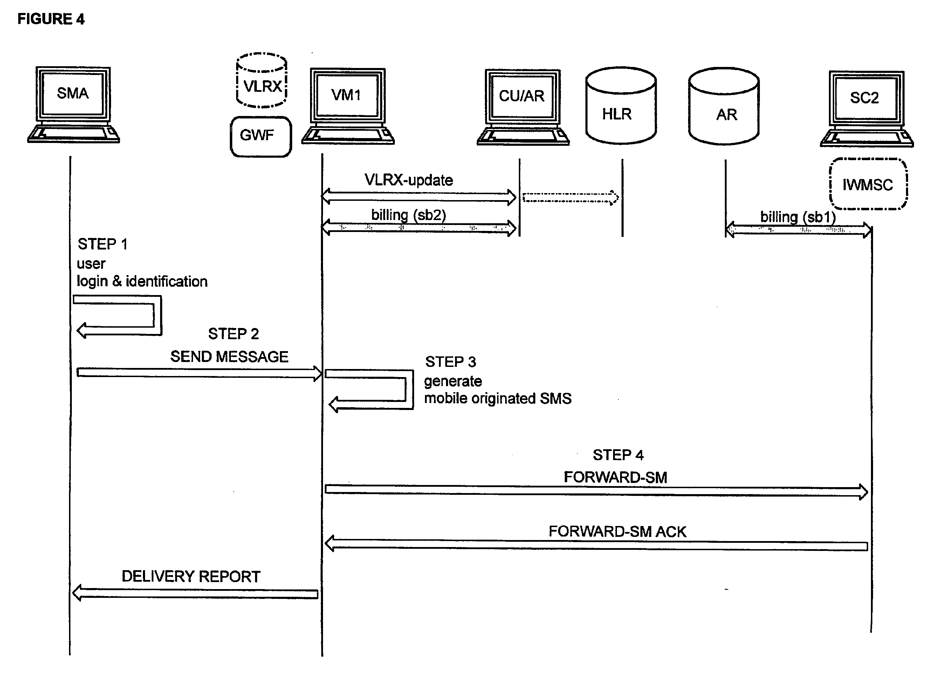

- Figure 4: shows transactions performed in the telecommunication network shown in figures 2 and 3 for transferring a message from the messaging application SMA to the message server VM1, where a Mobile Originated Short Messages MO-SM is generated that subsequently is forwarded to the service centre SC2; and
- Figure 5: shows transactions performed in the telecommunication networks shown in figures 1, 2 and 3 for sending a Short Message SM from the service centre SC2 to a terminating Short Message Entity SME such as a Mobile Station MS.

### DETAILED DESCRIPTION OF THE PREFERRED EMBODIMENTS

Figure 1 shows a known telecommunications network designed to convey messages originating in the Internet or an Intranet and terminating in Mobile Stations MS of a first or a Mobile Telecommunications Network PLMN1; PLMN2. The structure of a GSM Mobile Telecommunications Network PLMN is shown and described in [1], pages 1226 to 1228. For TDMA systems using the IS-41 protocol and CDMA systems using the IS-95 protocol see [1], chapter 80.3, pages 1121-1123 or [1], chapter 89, pages 1257-1263.

A GSM Mobile Telecommunications Network can be viewed as a configuration comprising
a) a user level with voice and data terminals MS1, MS2, MS3;
b) a network level with Mobile Services Switching Centres MSC1, MSC2; Service Centres SC1, SC2; Gateway functions GMSC and interworking functions IWMSC belonging to a Mobile Services Switching Centre MSC and base station tranceivers BTS and thereto related base station controllers BSC;
c) a database level with Home Location Registers HLR, Visitor Location Registers VLR and Equipment Identity registers (not shown as this optional network entity is not relevant for the scope of this document) and
d) a signalling level working according to the Signalling System No. 7 with signalling points connected to the elements of the database level and with signalling points connected to the switching elements of the network layer.

In a different view the Mobile Stations MS, the Base Station Tranceivers BTS and thereto related Base Station Controllers BSC are contained in a Radio Subsystem, the mobile Services Switching Centres MSC1, MSC2; Service Centres SC1, SC2; gateway functions GMSC and interworking functions IWMSC as well as the home location and Visitor Location Registers HLR, VLR are contained in a Network and Switching Subsystem NSS and a Operation and Maintenance Centre (not shown), an Authentication Centre and an Equipment Identity Register (both not shown) are contained in an Operation Subsystem.

Fundamental procedures regarding the transfer of a Short Message SM from a Mobile Station MS to a service centre SC and from the service centre SC to a Mobile Station MS were described above.

The Service Centre SC1 shown in figure 1 may, as described in [4], be a work station comprising a memory to store Short Messages SM and subscriber data. The Service Centre SC1 is over a gateway and an interworking function on one side connected to the Mobile Services Switching Center MSC1. On the other side, over a TCP/IP interface, the service centre SC1 is connected to Internet or Intranet network entities SP and SMA0 which comprise services and applications capable of sending messages to the service centre SC1. Typically individual subscribers access the Service Centre SC1 over a service provider SP.

As mentioned above, a subscriber that holds a Mobile Station MS, e.g. Mobile Station MS1, which is registered at a Mobile Telecommunications Network, e.g. Mobile Telecommunications Network PLMN2 can of course send Short Messages SM to other subscribers, e.g. to Mobile Station MS2. As an alternative, the subscriber holding Mobile Station MS1 may also use the messaging application SMA0 to send a Short Message SM to Mobile Station MS2, in which the subscriber will however not appear as originator in the control fields (originating address OA) of a Mobile Originated Short Message MO-SM.

If the subscriber uses his Mobile Station MS1 to send Short Messages SM then standard control and billing procedures will be applied. In figure 1 the Service Center SC2 or the Mobile Services Switching Center MSC2 will generate standard call records sb1; sb2 that will be used to charge the subscriber's account which is stored in database AR.

However, if the subscriber sends the message from the messaging application SMA0, then the billing will be performed in different stages. In the given example the Service Center SC1 generates a call record pb0 which is used to debit the account of the service provider SP. The service provider SP will be charged (invoice pb1) by the operator of the Mobile Telecommunications Network PLMN1 according to a given agreement. Further the service provider SP will charge (invoice pb2) the subscriber, the holder of Mobile Station MS1, according to a further agreement which is independent from the agreement that exists between the subscriber and the network operator.

The disadvantages of this system have been described above. Billing through separate channels and involvement of a service provider generates a significant administrative overhead. Further, in view of relevant control information the Short Messages SM sent by the subscriber through the messaging application SMA0 and through his Mobile Station MS1 is not identical which has consequences not only for billing procedures, but also for traffic statistics, security and further handling. Replying to a Short Message SM received from the service provider requires additional manipulations. The receiving subscriber may be required to type in the destination address DA of Mobile Station MS1 which may have been provided within the received message's user data UD, that are limited to 160 characters. The known solution therefore not only burdens the administrative channels and the control channels, but also the user data channels.

Fig. 2 shows a Mobile Telecommunications Network PLMN1 comprising an inventive message server VM1
- that uses signalling functions according to the standards of said Mobile Telecommunications Network PLMN1,
- that directly or indirectly connects to a messaging application SMA operating in the Internet and
- that is designed to generate and forward Mobile Originated Short Messages MO-SM based on data assigned by an operator of a Mobile Telecommunications Network PLMN1 to a registered subscriber who wants to send a message through the messaging application SMA.

For this purpose
a) a subscriber with a Mobile Station MS that is registered at a Mobile Telecommunications Network PLMN2) provides address data, that corresponds to the agreement with his network operator, and user data to the messaging application SMA,
b) the messaging application SMA forwards said data to the message server VM1,
c) the message server VM1 generates, based on said data and according to the standards of the Mobile Telecommunications Network, a Mobile Originated Short Message MO-SM that contains in therefore provided fields of a Protocol Data Unit
   c1) an Originating Address OA corresponding to the subscriber's Mobile Station number MSISDN,
   c2) a corresponding Service Center Address SCA,
   c3) a corresponding Destination Address DA, and
   c4) the user data UD,
and then forwards the generated Mobile Originated Short Message MO-SM via the addressed Service Center SC to its destination, a Short Message Entity SME that may be located inside or outside the Mobile Telecommunications Network.

In a basic example, the holder of Mobile Station MS1 provides the Mobile Station number MSISDN and a message text to the messaging application SMA that forwards the received information to the message server VM1, which generates a Mobile Originated Short Message MO-SM.

[3], chapter 9 describes the protocol architecture of the GSM Short Message System SMS. [3], page 30, figure 03.40/7 shows an overview of the protocol layers and their implementation in the network entities (see [3], page 23, network architecture). According to [3], page 53, for a Mobile Originated Short Message MO-SM the Mobile Station number MSISDN is carried in the Relay Layer element RP-OA (Originating-Address), the Service Center Address SCA is carried in the Relay Layer element RP-DA (Destination-Address) and the user data UD enclosed in a Transport Protocol Data Unit TPDU is carried within the Relay Layer element RP-UD (User Data).

The message server VM1 generates the Short Message SM therefore according to the protocol specifications implemented in the hosting Mobile Telecommunications Network PLMN.

For the sake of completeness it may be noted that for the so called Mobile Terminated Short Messages MT-SM, that are sent from the Service Center SC to the terminating Short Message Entity SME, the Service Center Address SCA is contained in the Relay Layer element RP-OA as Originating-Address and the Originating address of the Mobile Station MS1, namely the Mobile Station number MSISDN is contained in the Transport Layer element TP-OA (TP Originating-Address).

However, regardless of said protocol details, the inventive solution teaches to handle messages sent through the messaging application in the same manner within the Mobile Telecommunications Network as Short Messages SM sent from a Mobile Station MS, that is registered with the Mobile Telecommunications Network. Virtually the message server VM1 appears in the Mobile Telecommunications Network PLMN therefore as a Mobile Services Switching Center MSC serving one or more registered Mobile Station(s) MS.

The messaging application SMA, e.g. a HTML browser, may provide a simply structured interface allowing the subscriber to provide the required address and user data. During an initial session the subscriber gets registered and is requested to provide the number MSISDN of his Mobile Station MS, which is registered at the Mobile Telecommunications Network PLMN.

The subscriber may get registered at the messaging application SMA or directly at the message server VM1. In order to prevent fraud, the messaging application SMA or the message server VM1 preferably reply to the subscriber's registration by means of a Short Message SM that contains a password and that is sent to the subscriber's Mobile Station MS1, ensuring that only the holder of the subscriber's Mobile Station MS1 can use the messaging service. If subscriber's data are stored in the message server VM, which is normally the case, then the password may be stored in the message server VM too, so that all security relevant data are controlled by the operator of the related Mobile Telecommunications Network PLMN2.

Further, since the status of the subscriber may change between sessions, the message server VM preferably requests information regarding the current rights and restrictions of the served subscribers. For example, a subscriber may be entitled to use premium rated added value services which allow the use of a short number as Destination Address DA instead of a Mobile Station number MSISDN. As the subscribers are normally not registered at a related Visitor Location Register VLR, the message server preferably maintains and updates its own register for the served subscribers. For this purpose the message server regularly, for example during every session downloads the required data from the Home Location Register HLR.

As described in [5], page 153, the service "MAP_ INTERROGATE_SS", for example, may be used to retrieve information related to a supplementary service.

The Service Center Address SCA, an E.164 number, which is required for the transmission of the Mobile Originated Short Message MO-SM, is normally stored in the SIM card of the subscriber's Mobile Station MS. Hence, the subscriber may obtain it from his Mobile Station MS and provide it to the messaging application SMA. However it would be preferable, if the message server VM could obtain the Service Center Address SCA from the registers maintained in entities (e.g. the Home Location Registers HLR) of the Mobile Telecommunications Networks PLMN or their operators. Therefore the Service Center Address SCA is preferably obtained by the message server VM1 from the Home Location Register HLR to which the Mobile Station MS is assigned. As an alternative the message server VM1 could forward the message to a message server VM2 that possesses the required information. E.g., if every network operator makes the required subscriber data (MSISDN, SCA) available to its own message server VM1, VM2, then the first message server VM1 sends the message to the second message server VM2 in the subscriber's home-network PLMN2 for further processing. This measure would also facilitate billing processes since the second message server VM2 could debit the due charges directly to the subscriber's account.

Retrieving the Service Center Address SCA from the Home Location Register HLR requires of course, that it is stored therein.

[11], SMG4, "SMSC address checking in Status reports", describes problems that relate to the introduction of multiple Service Centers SC into a Mobile Telecommunications Network PLMN for reasons of redundancy, capacity and load sharing. As a result it has been found that certain Mobile Stations MS were unable to process Status Reports correctly. Further described in [11] is that GSM standard 03.40 does not require the Mobile Stations MS to check the Service Center Address SCA in the received status report.

It is therefore proposed to store the Service Center Address SCA in the Mobile Telecommunications Network PLMN, preferably in the Home Location Register HLR. This would not only allow the download of the Service Center Address SCA but also a significant improvement regarding load sharing. Subscribers would therefore no longer be given a static Service Center Address SCA. Instead subscribers would receive a dynamic Service Center Address SCA that would be varied in order to balance the load between the Service Centers SC by flexible, temporary assignments of Service Center Addresses SCA to individual or groups of subscribers. Further, the Service Center Address SCA would no longer be required in the SIM-card of the Mobile Station MS.

The Service Center Address SCA may therefore be forwarded to the message server VM
- by the subscriber via the messaging application SMA,
- by the network operator or
- by automatic retrieval from a register or database.

As mentioned above, messages could also be routed to a message server VM, preferably the message server VM of the subscriber's home network PLMN, which possesses the required information, namely the Service Center Address SCA.

A service for retrieving information related to a subscriber is for example "MAP_SEND_ROUTING_INFO_FOR_SM". As described in [5], page 165, the "MAP_SEND_ROUTING_INFO_FOR_SM" service is used to retrieve the routing information needed from the Home Location Register HLR. Hence, if the Service Center Address SCA is stored in the Home Location Register HLR, then it could be retrieved by means of a service such as "MAP_SEND_ROUTING_INFO_FOR_SM", which for this purpose would be adapted for use with Mobile Originated Short Messages MO-SM. The adapted service could be designated "MAP_SEND_ROUTING_INFO_FOR_MO_SM" or "MAP_SEND_SCA". A further service that could advantageously be adapted to provide the Service Center Address SCA in its response is the "MAP_INTERROGATE_SS" service. However, all present or future services, that include the Service Center Address SCA in the response, are/will be applicable with the inventive method.

In order to perform the above described services and actions the message server preferably comprises functionalities of a Mobile Services Switching Center MSC and/or a Visitor Location Register VLR that allow
a) interrogation and storage of subscriber specific information from the Home Location Register HLR,
b) forwarding of Mobile Originated Short Messages MO-SM to a Service Center SC and/or
c) pre-paid or post-paid billing for Mobile Originated Short Messages MO-SM.

According to the standards implemented in the Mobile Telecommunications Network PLMN, billing may be performed in the originating Mobile Services Switching Center MSC, in a Service Center SC or in the terminating Mobile Services Switching Center MSC. Billing for transferred Short Messages SM handled according to the inventive method is therefore performed according to the standards implemented in the Mobile Telecommunications Network PLMN.

In the event that the message server VM operates as originating Mobile Services Switching Center, then it preferably debits each forwarded Mobile Originated Short Message MO-SM to an account that corresponds to the Originating Address OA contained in the Mobile Originated Short Message MO-SM. Also for this case, standardised functionalities can be applied, so that the transferred Short Message SM is handled in the same manner as a Short Message SM sent from the subscriber's Mobile Station MS is handled.

If a message server VM1 has no direct interconnection to a Service Center SC in a foreign Mobile Telecommunications Network PLMN then the message server VM1 may use a routing table in order to forward the Mobile Originated Short Message MO-SM via at least one further message server VM2 to the addressed Service Center SC. Further, as described above, if a message server VM1 does not possess the required Service Center Address SCA, then it would also forward the Mobile Originated Short Message MO-SM to a second message server VM2 that possesses the required information. Preferably the Mobile Originated Short Message MO-SM is sent to the message server VM2 that is located in the subscriber's home network PLMN2. This can be done by interpretation of the Mobile Network Code MNC (see [2], page 261, figure 3.56), which is contained in the International Mobile Subscriber Identity IMSI (see [2], page 261-262, figure 3.57) which can be retrieved by the message server VM from the Home Location Register HLR by means of the "MAP-SEND-IMSI" service (see [5], page 198).

If the message server VM1 has no access to a register containing the Service Center Address SCA, then the subscriber may be requested through the messaging application SMA to provide the required address information. Further as shown in figure 3, the control units CU, CU1, CU2, ... or the messaging applications SMA assigned to the message servers VM1, VM2, ... may be interconnected over a network, e.g. the Internet or a telecommunications network, in order to exchange routing information, in particular Service Center Addresses SCA, and/or messages that will be converted into a Mobile Originated Short Message MO-SM.

In order to forward the Mobile Originated Short Message MO-SM to the addressed Service Center SC, the message server VM1 must act as a Mobile Services Switching Center MSC within the hosting Mobile Telecommunications Network PLMN1. Towards other Mobile Telecommunications Networks PLMN2, PLMN3, it looks like the user is roaming in the message server's VM network. Therefore a prerequisite may be, that there is a roaming agreement between the concerned network operators allowing the subscriber to send messages while roaming.

If there is no agreement between network operators (e.g. operators in the same country), additional message servers VM2, VM3 which are installed in other Mobile Telecommunications Networks PLMN2, PLMN3 may by used for routing the Short Messages SM.

Figure 3 shows the telecommunication network of figure 2 with the message server VM1 of the first Mobile Telecommunications Network PLMN1 being interconnected to the Service Center SC2 of the second Mobile Telecommunications Network PLMN2 via the message server VM3 installed in the third Mobile Telecommunications Network PLMN3. Therefore, in spite of the lack of a roaming agreement between the network operators of the first and the second Mobile Telecommunications Network PLMN1; PLMN2, Mobile Originated Short Messages MO-SM can be sent from the message server VM1, located in the first Mobile Telecommunication Network PLMN1, to the subscribers Service Center SC2 located in the second Mobile Telecommunication Network PLMN2.

Further shown in figure 3 is, that the message server VM1 is connected to a control unit CU, e.g. a work station that is used for management purposes.

Transactions performed in order to transfer a Mobil Originated Short Message MO-SM from the message server VM, VM1, VM2, ... to a Service Center SC, SC1, SC2, ... are shown in figure 4 (see [3], page 64).

For the example shown in figure 2, as a first step, the subscriber logs in by means of his password at the messaging application SMA and is identified as a subscriber of the Mobile Telecommunications Network PLMN2. Through the graphical interface of the messaging application SMA the subscriber enters a text message and the Destination Address, normally a Mobile Station number MSISDN. The originating address, namely the number MSISDN of the subscriber's Mobile Station MS1 had been stored during an initial session.

In a second step the received data are forwarded to the message server VM, which, as described above, in a third step generates a Mobile Originated Short Message MO-SM, that with step 4 is forwarded to the addressed Service Center SC by means of the "MO-FORWARD-SM" operation. In case that the message server VM has no direct access to the Service Center SC it may send the Short Message SM to an Interworking-MSC IWMSC which is a function of a Mobile Services Switching Center MSC capable of receiving a Short Message SM from within the PLMN and submitting it to the recipient Service Center SC2. If the message server VM1 has no direct access to the Service Center SC2 and to the Interworking-MSC IWMSC, e.g. due to lack of an interconnection agreement, then the message server VM1 would route the Short Message SM through another message server VM3 to the addressed Service Center SC2 (see figure 3).

Transactions performed in order to transfer a Mobil Terminated Short Message MT-SM from a Service Center SC, SC1, SC2, ... to a terminating Short Message Entity SME are shown in figure 5 (see [3], page 56).

First the Short Message SM is transferred to a Gateway entity GMSC that may be incorporated in the Service Center SC. Then the Gateway entity GMSC interrogates the Home Location Register HLR by means of "SEND-ROUTING-INFO-FOR-SM" in order to retrieve information necessary to forward the Short Message SM. Then the Short Message SM is forwarded to the Mobile Services Switching Center MSC2 at which the Mobile Station MS is currently located.

Subsequently, the Mobile Services Switching Center MSC2 retrieves subscriber information from the Visitor Location Register VLR for the Mobile Terminated Short Message MT-SM transfer. Then the Short Message SM is transferred from the Mobile Services Switching Center MSC2 to the Mobile Station MS or a further Short Message Entity SME that may be located in a fixed network.

Finally, receipt of the Short Message SM is sequentially acknowledged towards the network entities MSC2, SC2, VM1 along the transfer path and back to the messaging application SMA (see figures 5 and 4).

The message server VM, VM1, VM2, which uses signalling functions according to the standards of said Mobile Telecommunications Network PLMN, e.g. the functions of the Signalling System Number 7, may be a work station that comprises
- an interface which allows communication with the messaging application SMA,
- a gateway function GWF that allows adaptation of the protocols used towards the messaging application SMA and inside the Mobile Telecommunications Network,
- a memory unit VLRX that preferably allows to store data of the registered subscribers and
- a processor unit that allows the generation of Mobile Originated Short Messages MO-SM according to the standards of the mobile telecommunication network.

In a preferred embodiment the message server further comprises functionalities of a Mobile Services Switching Center MSC and/or functionalities of a Visitor Location Register VLR that allow
- interrogation of subscriber specific information from the Home Location Register HLR and storage,
- forwarding of Mobile Originated Short Messages MO-SM to a Service Center SC and/or
- billing for Mobile Originated Short Messages MO-SM.

The inventive message server can independently be installed at an access point of the Mobile Telecommunications Network. Further, the message server can be integrated in a Service Center SC or integrated in a Mobile Services Switching Center MSC.

The message server VM is not restricted to the mentioned protocols implemented in the Mobile Telecommunications Network PLMN or in the messaging application SMA and its network. The boundaries of the entities used along the message transfer path may change from one implementation of the invention to another. E.g. login and registration procedures may be handled by the messaging application SMA alone or by the message server VM which then uses the messaging application SMA as an extended interface. Further, as mentioned above, the message server VM may also be combined with other network entities such as a Service Center SC or a Mobile Services Switching Center MSC (see figure 3, extended Service Center SCe, extended Mobile Services Switching Center MSCe) allowing the merged entities VM/SC or VM/MSC to access functionalities of the partner unit. Further, the message server VM may use commands, services or operations for retrieving required information, which are different from the ones described above. The message path of course is not limited to transfers within one or more Mobile Telecommunications Networks PLMN, PLMN1, PLMN, 2, PLMN3. The transfer path may extend, e.g. over gateways or protocol converters into other networks. E.g. an international company may use the invention in order to connect its Intranets by means of the Short Message Service SMS.

### REFERENCES

[1] THE COMMUNICATIONS HANDBOOK, CRC PRESS, Boca Raton 1997
[2] B. Walke, Mobilfunknetze und ihre Protokolle, Band 1, B.G. Teubner Verlag, Stuttgart 2000
[3] Technical realisation of the Short Message Service (SMS), Point-to-Point (PP), (GSM 03.40); ETSI European Telecommunication Standard ETS 300 536 (October 1994)
[4] U.S. Patent No. 5,768,509 (Günlük)
[5] GSM Technical Specification 09.02 (Mobile Application Part (MAP) specification)
   ETSI European Telecommunication Standard ETS 300 599 (February 1995)
[6] Douglas E. Comer, INTERNETWORKING with TCP/IP, PRINCIPLES, PROTOCOLS, AND ARCHITECTURES, 4th EDITION, Prentice Hall 2000
[7] International Publication WO 01/63883 A2
[8] International Publication WO 98/56202
[9] International Publication WO 96/06508
[10] UK Patent Application GB 2351880 A
[11] SMG4, SMSC address checking in Status reports, SMG4/TSGT2#2(99)205, London, UK, 15th - 19th March 1999, Source: Vodafone
   http://www.3gpp.org/ftp/tsg t/WG2 Capability/TSGT2 02/Doc s/t2-99205.doc)
[12] U.S. Patent No. 6,134,432 (Holmes, Munro, Hall, Kerr)

## Claims

1. A method for handling messages, particularly Short Messages (SM), that are forwarded to and within a Mobile Telecommunications Network (PLMN) such as a GSM, TDMA, CDMA or 3G (MMS) system and that originate from a messaging application (SMA) implemented in a network such as an IP-network which is not using the standards of said Mobile Telecommunications Network (PLMN) wherein
a) a subscriber of said Mobile Telecommunications Network (PLMN) provides address data and user data to the messaging application (SMA),
b) the messaging application (SMA) forwards said data to a message server (VM1) that uses signalling functions according to the standards of said Mobile Telecommunications Network (PLMN), such as the functions of the Signalling System Number 7,
c) the message server (VM1) generates, based on said data and according to the standards of the Mobile Telecommunication Network (PLMN), a Mobile Originated Short Message (MO-SM) that contains in therefore provided fields of a Protocol Data Unit
c1) the subscriber's Mobile Station number (MSISDN) as the Originating Address (OA),
c2) the subscriber's Service Center Address (SCA),
c3) the Destination Address (DA) provided by the subscriber, and
c4) the user data (UD) provided by the subscriber,
and forwards the generated Mobile Originated Short Message (MO-SM) via the addressed Service Center (SC) to its destination (SME, MS2).

2. Method according to claim 1, wherein the subscriber provides to the messaging application (SMA) at least during an initial session the
a) the number (MSISDN) of the subscriber's Mobile Station (MS) or
b) the number (MSISDN) of the subscriber's Mobile Station (MS) and the corresponding Service Center Address (SCA).

3. Method according to claim 1 or 2, wherein during the initial session the subscriber registers at the messaging application (SMA) or via the messaging application (SMA) at the message server (VM1) which in turn sends a password to the subscriber's Mobile Station (MS) that allows the subscriber to send Short Messages (SM) through the messaging application (SMA) during subsequent sessions.

4. Method according to claim 1, 2 or 3, wherein the message server (VM1) based on the number (MSISDN) of the subscriber's Mobile Station (MS) retrieves the corresponding Service Center Address (SCA) by means of services that include the Service Center Address (SCA) in their response.

5. Method according to claim 1, 2, 3 or 4, wherein the message server (VM1) based on the number (MSISDN) of the subscriber's Mobile Station (MS) or the corresponding identity (IMSI) retrieves the related status of supplementary services and restrictions from the corresponding Home Location Register (HLR) preferably by means of the service "MAP_ INTERROGATE_SS".

6. Method according to claim 2, 3, 4 or 5, wherein the message server (VM1) stores and regularly updates the subscriber's data, particularly subscriber's rights and/or the password for the login.

7. Method according to claim 2, 3, 4 or 5, wherein the message server (VM1) comprises functionalities of a Mobile Services Switching Center (MSC) and/or a Visitor Location Register (VLR) that allow
a) interrogation and storage of subscriber specific information from the Home Location Register (HLR),
b) forwarding of Mobile Originated Short Messages (MO-SM) to a Service Center (SC) and/or
c) pre-paid or post-paid billing for Mobile Originated Short Messages (MO-SM).

8. Method according to claim 7, wherein the message server (VM1) debits each forwarded Mobile Originated Short Message (MO-SM) to an account that corresponds to the Originating Address (OA) contained in the Mobile Originated Short Message (MO-SM).

9. Method according to one of the claims 1 to 8, wherein the message server (VM1), by means of a routing table, forwards the Mobile Originated Short Message (MO-SM) via at least one further message server (VM2, VM3, ...), that may be located in the subscriber's home Mobile Telecommunications Network (PLMN2) or in a further Mobile Telecommunications Network (PLMN3), to the addressed Service Center (SC).

10. Message server (VM1) operating according to a method as defined in of the claims 1 to 9, comprising
a) signalling functions according to the standards of said Mobile Telecommunications Network (PLMN) allowing generation and despatch of Mobile Originated Short Messages (MO-SM);
b) an interface (IF) which allows receipt of a subscriber's registration data and messages from the messaging application (SMA), that is implemented in a network such as an IP-network which is not using the standards of said Mobile Telecommunications Network (PLMN);
c) a gateway function (GWF) that allows adaptation of the protocols used towards the messaging application (SMA) and inside the Mobile Telecommunications Network (PLMN);
d) a memory unit (VLRX) that allows storing data of the registered subscribers and
e) a processor unit that allows, based on a subscriber's message received from the messaging application (SMA), generating of Mobile Originated Short Messages MO-SM that contain in therefore provided fields of a Protocol Data Unit
e1) the subscriber's Mobile Station number (MSISDN) as the Originating Address (OA),
e2) the subscriber's Service Center Address (SCA),
e3) the Destination Address (DA) provided by the subscriber, and
e4) the user data (UD) provided by the subscriber.

11. Message server (VM1) according to claim 10, comprising functionalities (GWF, VLRX) of a Mobile Services Switching Center (MSC) and/or a Visitor Location Register (VLR) that allow
a) interrogation and storage of subscriber specific information from the Home Location Register (HLR),
b) forwarding of Mobile Originated Short Messages (MO-SM) to a Service Center (SC) and/or
c) billing for Mobile Originated Short Messages (MO-SM).

12. Message server (VM1) according to claim 10 or 11, independently installed at an access point of the Mobile Telecommunications Network, integrated in a Service Center (SC) or integrated in a Mobile Services Switching Center (MSC).

13. Telecommunications network comprising a message server (VM1) as defined in claim 10, 11, or 12; which is installed in said Mobile Telecommunications Network (PLMN) and which is connected via the interface (IF) to at least one messaging application (SMA) implemented in a network such as an IP-network which is not using the standards of said Mobile Telecommunications Network (PLMN).

## Patentansprüche

1. Verfahren zur Behandlung von Nachrichten, insbesondere Kurznachrichten (SM), die zu einem und innerhalb eines Mobilfunknetzes (PLMN), wie einem GSM, TDMA, CDMA oder 3G (MMS)-System, befördert werden und die von einer Nachrichtendienstanwendung (SMA) herkommen, welche in einem Netzwerk, wie einem IP-Netzwerk, implementiert ist, welches die Standards des Mobilfunknetzes (PLMN) nicht benutzt, wobei
a) ein Teilnehmer des genannten Mobilfunknetzes (PLMN) Adressdaten und Anwenderdaten der Nachrichtendienstanwendung (SMA) zuführt,
b) die Nachrichtendienstanwendung (SMA) die genannten Daten einem Nachrichtenserver (VM1) zuführt, welcher Signalisierungsfunktionen gemäss den Standards des genannten Mobilfunknetzes (PLMN), wie die Funktionen des Signalisierungssystems Nr. 7, verwendet,
c) der Nachrichtenserver (VM1), basierend auf den genannten Daten und entsprechend den Standards des genannten Mobilfunknetzes (PLMN), eine Kurznachricht (Mobile Originated Short Message MO-SM), die einer von einem Mobilfunkendgerät (MS) erzeugten Kurznachricht entspricht, generiert, die in den dafür vorgesehenen Feldern einer Protokolldateneinheit enthält
c1) die Rufnummer (MSISDN) des Teilnehmers als Absenderadresse (Originating Address OA),
c2) die Service Center Adresse (SCA) des Teilnehmers,
c3) die vom Teilnehmer eingegebene Zieladresse (Destination Address DA), und
c4) die vom Teilnehmer abgegebenen Anwenderdaten (UD),
und die Kurznachricht (MO-SM), die einer von einem Mobilfunkendgerät (MS) erzeugten Kurznachricht entspricht, via das adressierte Service Center (SC) an deren Ziel (SME, MS2) überträgt.

2. Verfahren nach Anspruch 1, **dadurch gekennzeichnet, dass** der Teilnehmer der Nachrichtendienstanwendung (SMA) zumindest während einer Eingangssession
a) die Nummer (MSISDN) des Mobilendgeräts (MS) des Teilnehmers oder
b) die Nummer (MSISDN) des Mobilendgeräts (MS) des Teilnehmers und die korrespondierende Service Center Adresse (SCA)
zuführt.

3. Verfahren nach Anspruch 1 oder 2, **dadurch gekennzeichnet, dass** sich der Teilnehmer während einer Eingangssession bei der Nachrichtendienstanwendung (SMA) oder via die Nachrichtendienstanwendung (SMA) beim Nachrichtenserver (VM1) registriert, welcher dann ein Passwort zum Mobilendgerät (MS) des Teilnehmers sendet, welches dem Teilnehmer während folgenden Sessionen erlaubt, Kurznachrichten (SM) durch die Nachrichtendienstanwendung (SMA) zu senden.

4. Verfahren nach Anspruch 1, 2 oder 3, **dadurch gekennzeichnet, dass** der Nachrichtenserver (VM1) basierend auf der Rufnummer (MSISDN) des Mobilendgeräts (MS) des Teilnehmers die korrespondierende Service Center Adresse (SCA) anhand von Diensten ermittelt, die in ihren Antworten die Service Center Adresse (SCA) enthalten.

5. Verfahren nach Anspruch 1, 2, 3 oder 4, **dadurch gekennzeichnet, dass** der Nachrichtenserver (VM1) basierend auf der Rufnummer (MSISDN) des Mobilendgeräts (MS) des Teilnehmers oder der korrespondierenden Identität (IMSI) vorzugsweise mittels des Dienstes "MAP_ INTERROGATE_SS" den diesbezüglichen Status der Zusatzdienste und Restriktionen von der korrespondierenden Heimatdatei (HLR = Home Location Register) ermittelt.

6. Verfahren nach Anspruch 2, 3, 4 oder 5, **dadurch gekennzeichnet, dass** der Nachrichtenserver (VM1) die Daten des Teilnehmers, insbesondere die Rechte des Teilnehmers und/oder das Passwort für den Zugang, speichert und regelmässig aufdatiert.

7. Verfahren nach Anspruch 2, 3, 4 oder 5, **dadurch gekennzeichnet, dass** der Nachrichtenserver (VM1) Funktionalitäten einer Mobilvermittlungsstelle (MSC) oder einer Besucherdatei (VLR = Visitor Location Register) aufweist, welche
a) die Abfrage und Speicherung von teilnehmerspezifischen Informationen aus der Heimatdatei (HLR),
b) die Abgabe von Kurznachrichten (MO-SM), die einer von einem Mobilfunkendgerät (MS) erzeugten Kurznachricht entspricht, an ein Service Center (SC) und/oder
c) die Verrechnung mit Vorausbezahlung oder Nachbezahlung für Kurznachrichten (MO-SM), die den von einem Mobilfunkendgerät (MS) erzeugten Kurznachrichten entsprechen,
erlauben.

8. Verfahren nach Anspruch 7, **dadurch gekennzeichnet, dass** der Nachrichtenserver (VM1) jede Abgabe einer Kurznachricht (MO-SM), die einer von einem Mobilfunkendgerät (MS) erzeugten Kurznachricht entspricht, einem Konto belastet, welches zur Absenderadresse (OA) korrespondiert, welche in der Kurznachricht (MO-SM), die einer von einem Mobilfunkendgerät (MS) erzeugten Kurznachricht entspricht, enthalten ist.

9. Verfahren nach einem der Ansprüche 1-8, **dadurch gekennzeichnet, dass** der Nachrichtenserver (VM1) die Kurznachricht (MO-SM), die einer von einem Mobilfunkendgerät (MS) erzeugten Kurznachricht entspricht, mittels einer Routing Tabelle via wenigstens einen weiteren Nachrichtenserver (VM2, VM3, ...), der im Heimmobilfunknetz (PLMN2) des Teilnehmers oder in einem weiteren Mobilfunknetz (PLMN3) angeordnet ist, zum adressierten Service Center (SC) übermittelt.

10. Nachrichtenserver (VM1) funktionierend nach einem in den Ansprüchen 1 - 9 definierten Verfahren umfassend
a) Signalisierungsfunktionen entsprechend dem Standard des genannten Mobilfunknetzes (PLMN), welche erlauben, Kurznachrichten (MO-SM), die den von einem Mobilfunkendgerät (MS) erzeugten Kurznachrichten entsprechen, zu generieren und zu versenden;
b) ein Schnittstellenmodul (IF), welches erlaubt, Registrierungsdaten und Nachrichten eines Teilnehmers und Nachrichten von der Nachrichtendienstanwendung (SMA) zu empfangen, welche in einem Netzwerk, wie einem IP-Netzwerk, welches die Standards des genannten Mobilfunknetzes (PLMN) nicht benutzt, implementiert ist;
c) eine Protokollumsetzfunktion (gateway function GWF), welche erlaubt, die seitens der Nachrichtendienstanwendung (SMA) und die innerhalb des Mobilfunknetzes (PLMN) verwendeten Protokolle zu adaptieren;
d) eine Speichereinheit (VLRX), welche erlaubt, die Daten der registrierten Teilnehmer zu speichern; und
e) eine Prozessoreinheit, welche erlaubt, basierend auf der von der Nachrichtendienstanwendung (SMA) empfangenen Nachricht des Teilnehmers, eine Kurznachricht (MO-SM), die einer von einem Mobilfunkendgerät (MS) erzeugten Kurznachricht entspricht, zu generieren, die in den dafür vorgesehenen Feldern einer Protokolldateneinheit enthält
e1) die Rufnummer (MSISDN) des Teilnehmers als Absenderadresse (Originating Address OA),
e2) die Service Center Adresse (SCA) des Teilnehmers,
e3) die vom Teilnehmer eingegebene Zielnummer (Destination Address DA), und
e4) die vom Teilnehmer abgegebenen Anwenderdaten (UD)

11. Nachrichtenserver (VM1) nach Anspruch 10, umfassend Funktionalitäten (GWF, VLRX) einer Mobilvermittlungsstelle (MSC) und/oder einer Besucherdatei (VLR), welche erlauben
a) die Abfrage und Speicherung von teilnehmerspezifischen Informationen aus der Heimatdatei (HLR),
b) die Abgabe von Kurznachrichten (MO-SM), die den von einem Mobilfunkendgerät (MS) erzeugten Kurznachrichten entsprechen, an ein Service Center (SC) und/oder
c) die Verrechnung für Kurznachrichten (MO-SM), die den von einem Mobilfunkendgerät (MS) erzeugten Kurznachrichten entsprechen.

12. Nachrichtenserver (VM1) nach Anspruch 10 oder 11, unabhängig installiert an einer Zugangsstelle des Mobilfunknetzes, integriert in ein Service Center (SC) oder integriert in eine Mobilvermittlungsstelle (MSC).

13. Telekommunikationsnetzwerk, umfassend einen Nachrichtenserver (VM1) wie in den Ansprüchen 10, 11 oder 12 definiert; welcher im genannten Mobilfunknetz (PLMN) installiert ist und der via das Schnittstellenmodul (IF) mit wenigstens einer Nachrichtendienstanwendung (SMA) verbunden ist, die in einem Netzwerk, wie einem IP-Netzwerk, implementiert ist, welches die Standards des Mobilfunknetzes (PLMN) nicht benutzt.

## Revendications

1. Procédé pour traiter les messages, en particulier les messages courts (SM) qui sont acheminés vers et dans un réseau de télécommunication mobile (PLMN = Public Land Mobile Network = réseau publique mobile terrestre) tels qu'un système GSM, TDMA, CDMA ou 3G (MMS) et qui proviennent d'une application de messagerie (SMA) mise en oeuvre dans un réseau tel qu'un réseau IP qui n'utilise pas les standards du dudit réseau mobile de télécommunication (PLMN), dans lequel
a) un abonné dudit réseau mobile de télécommunication (PLMN) fournit une donnée d'adresse et une donnée d'utilisateur à l'application de messagerie (SMA),
b) l'application de messagerie (SMA) achemine lesdites données à un serveur de messages (VM1) qui utilise des fonctions de signalement selon les standards dudit réseau mobile de télécommunication (PLMN), tels que les fonctions du numéro de système de signalement 7,
c) le serveur de messages (VM1) génère en se basant sur lesdites données et selon les standards du réseau mobile de télécommunication (PLMN), un message court émis depuis un téléphone mobile (MO-SM) qui contient dans des champs prévus à cet effet d'une unité de données protocolaires
c1) le numéro de station mobile (MSISDN = Mobile Subscriber International ISDN Number) de l'abonné comme l'adresse d'origine (OA),
c2) l'adresse du centre de service (SCA) de l'abonné,
c3) l'adresse de destination (DA) fournie par l'abonné, et
c4) les données utilisateurs (UD) fournies par l'abonné,
et achemine le message court émis depuis un téléphone mobile (MO-SM) par l'intermédiaire du centre de service adressé (SC) à sa destination (SME, MS2)

2. Procédé selon la revendication 1, dans lequel l'abonné fournit à l'application de messagerie (SMA) au moins pendant une session initiale
a) le numéro (MSISDN) de la station mobile de l'abonné (MS) ou
b) le numéro (MSISDN) de la station mobile de l'abonné (MS) et le centre de service de l'abonné (SCA).

3. Procédé selon la revendication 1 ou 2, dans lequel pendant la session initiale, l'abonné s'enregistre auprès de l'application de messagerie (SMA) ou par le biais de l'application de messagerie (SMA) auprès du serveur de messages (VM1) qui à son tour envoie un mot de passe à la station mobile de l'abonné (MS) qui autorise l'abonné à envoyer des messages courts (SM) par l'application de messagerie (SMA) lors de sessions postérieures.

4. Procédé selon la revendication 1, 2 ou 3, dans lequel le serveur de messages (VM1) basé sur le numéro (MSISDN) de la station mobile de l'abonné (MS) récupère l'adresse du centre de service de l'abonné (SCA) correspondant par le biais de services qui incluent l'adresse de centre de service (SCA) dans leur réponse.

5. Procédé selon la revendication 1. 2 ou 3 ou 4, dans lequel le serveur de messages (VM1) basé sur le numéro (MSISDN) de la station mobile de l'abonné (MS) ou l'identité correspondante (IMSI) récupère le statut relatif des services et restrictions supplémentaires depuis le registre des abonnés nominaux (HLR = Home Location Register) de préférence au moyen du service "MA_INTERROGATE-SS".

6. Procédé selon la revendication 2, 3, 4 ou 5, dans lequel le serveur de messages (VM1) stocke et actualise régulièrement les données d'utilisateur, en particulier les droits des abonnés et/ou le mot de passe pour la connexion.

7. Procédé selon la revendication 2, 3, 4 ou 5 dans lequel le serveur de messages (VM1) comprend des fonctionnalités d'un centre de commutation du service mobile (MSC) et/ou l'enregistreur de localisation des visiteurs (VLR = Visitor Location Register) qui permet
a) l'interrogation et le stockage d'informations spécifiques à l'abonné depuis le registre des abonnés nominaux (HLR),
b) l'acheminement de messages courts émis depuis un téléphone mobile (MO-SM) à un centre de services (SC) et/ou
c) la facturation prépayée ou post-payée pour les messages courts émis depuis un téléphone mobile (MO-SM).

8. Procédé selon la revendication 7, dans lequel le serveur de messages (VM1) débite chaque message court émis depuis un téléphone mobile (MO-SM) sur un compte qui correspond à l'adresse d'origine (OA) contenue dans le message court émis depuis un téléphone mobile (MO-SM).

9. Procédé selon la revendication 7, dans lequel au moyen d'un tableau de routage, le serveur de messages (VM1) achemine le message court émis depuis un téléphone mobile (MO-SM) par l'intermédiaire d'au moins un autre serveur de messages (VM2, VM3, ...), qui peut être situé dans le réseau mobile de télécommunication domestique de l'abonné (PLMN2) ou dans un autre réseau mobile de télécommunication (PLMN3), au centre de service adressé (SC).

10. Serveur de messages (VM11) fonctionnant selon un procédé défini dans l'une des réclamations 1 à 9, comprenant
a) le signalement de fonctions conformément aux standards dudit réseau mobile de télécommunication (PLMN) permettant la génération et la distribution de messages courts émis depuis un téléphone mobile (MO-SM),
b) une interface (IF) qui permet de recevoir des messages et données d'inscription de l'abonné depuis l'application de messagerie (SMA) qui est mise en oeuvre dans un réseau tel qu'un réseau IP qui n'utilise pas les standards dudit réseau mobile de télécommunication (PLMN);
c) une fonction de passerelle (GWF) qui permet l'adaptation des protocoles utilisés à travers l'application de messagerie (SMA) et à l'intérieur du réseau mobile de télécommunication (PLMN);
d) une unité de mémoire (VLRX) qui permet le stockage des données des abonnés enregistrés et
e) une unité de processeur qui permet en se basant sur un message d'abonné reçu par l'application de messagerie (SMA), de générer des messages courts (MO-SM), émis depuis un téléphone mobile, qui contiennent des champs prévus d'une unité de données protocolaires,
e1) le numéro de station mobile de l'abonné (MSISDN) en tant qu'adresse d'origine (OA),
e2) l'adresse du centre de service de l'abonné (SCA),
e3) l'adresse de destination (DA) fournie par l'abonné et
e4) les données utilisateurs (UD) fournies par l'abonné.

11. Serveur de messages (VM1) selon la revendication 10, comprenant des fonctionnalités (GWF, VLRX) d'un centre de commutation du service mobile (MSC) et/ou d'un enregistreur de localisation des visiteurs (VLR) qui permet
a) l'interrogation et le stockage d'informations spécifiques à l'abonné depuis le registre des abonnés nominaux (HLR),
b) l'acheminement de messages courts émis depuis un téléphone mobile (MO-SM) à un centre de services (SC) et/ou
c) la facturation pour les messages courts émis depuis un téléphone mobile (MO-SM).

12. Serveur de messages (VM1) selon la revendication 10 ou 11, installé de manière indépendante à un point d'accès du réseau de télécommunication mobile, intégré dans un centre de service (SC) ou intégré dans un centre de commutation du service mobile.

13. Réseau de télécommunication comprenant un serveur de messages (VM1) tel que défini dans la revendication 10, 11 ou 12, qui est installé dans ledit réseau mobile de télécommunication (PLMN) et qui est connecté par l'interface (IF) à au moins une application de messagerie (SMA) mise en oeuvre dans un réseau tel qu'un réseau IP qui n'utilise pas les standards dudit réseau mobile de télécommunication (PLMN).
